# EUROPÄISCHE PATENTSCHRIFT

(11) **EP 3 353 795 B1**
(45) Veröffentlichungstag und Bekanntmachung des Hinweises auf die Patenterteilung: **17.07.2019**
(21) Anmeldenummer: 16782034.9
(22) Anmeldetag: 12.10.2016
(51) Int. Cl.: H02G 15/072, H01B 17/28

(54) **HOCHSPANNUNGSVORRICHTUNG**
HIGH-VOLTAGE DEVICE
DISPOSITIF HAUTE TENSION

(30) Priorität: 27.11.2015 DE 102015223587
(43) Veröffentlichungstag der Anmeldung: 01.08.2018
(73) Patentinhaber: Siemens Aktiengesellschaft, 80333 München (DE)
(72) Erfinder: SCHNITZLER, Tim, 52372 Kreuzau (DE); TITZE, Joachim, 40882 Ratingen (DE)
(86) Internationale Anmeldenummer: PCT/EP2016/074384
(87) Internationale Veröffentlichungsnummer: WO 2017/089023

(56) Entgegenhaltungen:
- DE-A1- 2 731 770
- GB-A- 345 604
- JP-A- S5 757 417
- JP-Y1- S4 410 760
- US-A- 2 288 969

## Beschreibung

Die Erfindung betrifft eine Hochspannungsvorrichtung einem Innenleiter, einem den Innenleiter entlang dessen Längsrichtung umgebenden Isolierkörper, der konzentrisch um den Innenleiter angeordnete und durch Isolierlagen voneinander beabstandete, elektrisch leitende Steuereinlagen zur Feldsteuerung umfasst, sowie einer elektrisch leitenden Verbindung zwischen dem Innenleiter und einer ersten, dem Innenleiter nächstliegenden Steuereinlage.

Hochspannungsvorrichtungen dieser Art sind aus dem Stand der Technik bekannt. Sie haben im Allgemeinen die Aufgabe, eine sich auf Hochspannungspotential befindende Hochspannungsleitung mit einem stromführenden Stromleiter von einer sich im Wesentlichen auf Erdpotential befindenden Umgebung zu isolieren.

Der Innenleiter der bekannten Hochspannungsvorrichtung ist allerdings meist nicht ideal zylindersymmetrisch und weist herstellungsbedingte Unregelmäßigkeiten in seiner Oberfläche auf. Aus diesen Gründen ist die Feldverteilung in der Umgebung des Innenleiters im Allgemeinen inhomogen, was eine Herabsetzung der Funktionsfähigkeit der Hochspannungsvorrichtung zur Folge haben kann.

Daraus ergibt sich die elektrotechnische Notwendigkeit, den Innenleiter mit der ersten Steuereinlage mittels einer Verbindungseinrichtung elektrisch zu verbinden. Dies wird auch als Ankontaktierung bezeichnet.

Bei der aus der PCT/EP2014/059627 bekannten Hochspannungsvorrichtung wird die Verbindungeinrichtung durch ein flexibles Metallband ausgeführt. Das Metallband ist an einem seiner Enden mit dem Innenleiter und mit dem anderen Ende an der ersten Steuereinlage fixiert. Ferner ist das Metallband fest von einem Isoliermedium des Isolierkörpers umschlossen.

Aus der DE 10 2012 203 712 A1 ist ferner eine Hochspannungsvorrichtung bekannt, die als Kabelendverschluss zum Anschluss eines Kabelendes an eine Freileitung dient. Der den Innenleiter umgebende Isolierkörper weist eine sich zu einem Stecckontakt für das Kabelende hin öffnende, kegelstumpfförmige Ausnehmung auf. Die Ausnehmung ist zur Aufnahme des Kabelendes vorgesehen, das entsprechend von einem Teil des Isolierkörpers umgeben ist. Insbesondere bei einem solchen Aufbau können störende Unregelmäßigkeiten der elektrischen Feldverteilung innerhalb der Hochspannungsvorrichtung auftreten.

In der DE 27 31 770 A1 ist ein Kabelendverschluss mit konzentrischen Steuereinlagen offenbart, dessen zweitinnere Steuereinlage sich axial über das Ender dessen innerster Steuereinlage hinaus erstreckt. Lediglich die innerste Steuereinlage ist elektrisch mit dem Innenleiter des bekannten Kabelendverschlusses verbunden.

Ein weiterer Hochspannungsisolator ist aus der US 2 288 969 A bekannt. Gemäß der US 2 288 969 A wird vorgeschlagen, zwischen einer inneren Steuereinlage und dem Innenleiter eine zusätzliche leitende Einlage vorzusehen, die dann die innerste Einlage bildet. Die zusätzliche Einlage und die innere Steuereinlage werden miteinander und mit dem Innenleiter leitend verbunden.

Die Aufgabe der Erfindung ist es, eine Hochspannungsvorrichtung der eingangs genannten Art vorzuschlagen, die eine möglichst gleichmäßige Feldverteilung ermöglicht.

Die Aufgabe wird bei einer artgemäßen Hochspannungsvorrichtung durch eine elektrisch leitende Verbindung zwischen dem Innenleiter und einer zweiten Steuereinlage gelöst, die sich axial zu einem Fußende der Hochspannungsvorrichtung über die erste Steuereinlage hinaus erstreckt.

Demnach ist erfindungsgemäß eine zusätzliche leitende Verbindung zwischen dem Innenleiter und einer weiteren, zweiten Steuereinlage hergestellt. Dies bedeutet, dass die zweite Steuereinlage ebenfalls auf das Potenzial des Innenleiters gebracht ist. Die zweite Steuereinlage erstreckt sich axial zu dem Fußende der Hochspannungsvorrichtung über die erste Steuereinlage hinaus. Als das Fußende wird dabei eines von beiden Enden der sich in der Längsrichtung erstreckenden Hochspannungsvorrichtung bezeichnet. Das andere Ende wird üblicherweise als ein Kopfende bezeichnet. Dementsprechend liegt das dem Fußende zugewandte Ende der zylindrischen zweiten Steuereinlage näher am Fußende als das entsprechende Ende der ersten Steuereinlage. Damit kann die zweite Steuereinlage durch die elektrische Verbindung mit dem Innenleiter eine Abschirmwirkung gegenüber einem Teil der Hochspannungsvorrichtung entfalten, der nicht von der ersten Steuereinlage umgeben ist. Wie eigene Versuche gezeigt haben, kann aufgrund dieser Abschirmwirkung die Verteilung des elektrischen Feldes in der Hochspannungsvorrichtung verbessert werden. Beispielsweise können Teile einer Fußarmatur, die am Fußende der Hochspannungsvorrichtung angeordnet ist und meist einen kleinteiligen Aufbau mit Ecken und Kanten und somit einer ungünstigen Feldverteilung aufweist, durch die zweite Steuereinlage abgeschirmt werden. Auf diese Weise kann ein relativ gleichmäßiger Verlauf der elektrischen Feldlinien auch in dem Bereich der Fußarmatur erreicht werden.

Gemäß einer Ausführungsform der Erfindung weist der Isolierkörper eine sich zum Fußende der Hochspannungsvorrichtung öffnende, kegelstumpfförmige Ausnehmung auf; die zweite Steuereinlage erstreckt sich axial in einen die Ausnehmung umgebenden Teil des Isolierkörpers hinein. Hierbei dient die Ausnehmung am Fußende der Hochspannungsvorrichtung zur Aufnahme eines abzuschirmenden Bauteils. Beispielsweise kann die Ausnehmung zur Aufnahme der Fußarmatur und/oder eines Steckverbindungstücks zur Verbindung mit einem weiteren Leiterstück oder einem Kabelende eingerichtet sein. Das Bauteil ist damit einerseits vom Isolierkörper teilweise umschlossen. Anderseits ist das Bauteil auf diese Weise auch mittels der zweiten Steuereinlage elektrisch abgeschirmt, weil die zweite Steuereinlage das in der Ausnehmung angeordnete Bauteil teilweise umgibt.

Vorzugsweise ist die zweite Steuereinlage zur ersten Steuereinlage nächstliegend. Es befindet sich demnach keine weitere Steuereinlage zwischen der ersten und der zweiten Steuereinlage. Dies erleichtert die Bereitstellung der elektrischen Verbindung zwischen den beiden Steuereinlagen. Es ist jedoch denkbar, dass die zweite Steuereinlage nicht die zweite im Sinne einer Zählung der Steuereinlagen vom Innenleiter nach außen ist. Als die zweite, mit dem Innenleiter verbundene Steuereinlage kann prinzipiell jede dazu geeignete von der ersten verschiedene Steuereinlage eingesetzt werden.

Bevorzugt ist zur Herstellung der elektrischen Verbindung zwischen dem Innenleiter und der ersten Steuereinlage ein erstes Metallband vorgesehen. Ein Metallband ist aufgrund seiner Biegsamkeit gegenüber starren Schienen oder Bolzen besonders geeignet. Ebenfalls geeignet sind beispielsweise Drähte und Bänder aus Metall oder einem anderen elektrisch leitenden Material.

Vorzugsweise ist ein zweites Metallband vorgesehen, das die erste Steuereinlage mit der zweiten Steuereinlage elektrisch verbindet. Hierbei ist die elektrische Verbindung zwischen dem Innenleiter und der zweiten Steuereinlage mittels einer Verbindung zwischen der mit dem Innenleiter verbundenen ersten Steuereinlage und der zweiten Steuereinlage realisiert. Dies stellt eine besonders einfache und zuverlässige elektrische Verbindung sicher. Auch hier sind anstelle eines Metallbandes Drähte und Bänder aus weiteren elektrisch leitenden Materialien einsetzbar. Es ist selbstverständlich ebenfalls denkbar, die elektrische Verbindung zwischen dem Innenleiter und der zweiten Steuereinlage separat und unabhängig von der elektrischen Verbindung zwischen dem Innenleiter und der ersten Steuereinlage vorzusehen.

Als besonders vorteilhaft wird angesehen, wenn die elektrische Verbindung zwischen dem zweiten Metallband und der zweiten Steuereinlage lötfrei ist. Dies bedeutet, dass das Metallband lediglich auf der zweiten Steuereinlage anliegt, ohne mit ihr durch Löten verbunden worden zu sein. Diese Art der Kontaktierung ist besonders einfach, weil auf das Löten verzichtet werden kann. Dies ist von Vorteil, weil durch das Löten kann unter Umständen das Material des Isolationskörpers beschädigt werden kann.

Gemäß einer Ausführungsform der Erfindung ist die kegelstumpfförmige Ausnehmung zur Aufnahme eines Leiterabschnittes eines Hochspannungskabels eingerichtet; die Hochspannungsvorrichtung umfasst ein Steckkontaktstück zur Verbindung des Leiterabschnittes mit dem Innenleiter. Die Hochspannungsvorrichtung kann hierbei beispielsweise ein Kabelendverschluss zur Herstellung einer elektrischen Verbindung zwischen einem Hochspannungskabel und einem elektrischen Leiter einer Freiluftleitung sein. Das Steckkontaktstück kann in diesem Zusammenhang mehrteilig und inhomogen ausgebildet sein. Dies führt dazu, dass der Verlauf des elektrischen Feldes in einer unmittelbaren Nähe des Steckkontaktstückes ohne dessen Abschirmung relativ inhomogen sein kann. In einem solchen Fall ist die Abschirmung durch die zweite Steuereinlage dazu geeignet, dort für einen relativ günstigen Verlauf des elektrischen Feldes zu sorgen. Insbesondere wird durch die Abschirmende Wirkung der zweiten Steuereinlage ein Auftreten von Teilentladungen an der Übergangsstelle vom Innenleiter zum Steckkontaktstück vermieden.

Das Steckkontaktstück kann beispielsweise Kontaktlamellen zur Herstellung einer elektrischen Verbindung zwischen dem Leiterabschnitt und dem Innenleiter und/oder geeignete Gewindebohrungen zur Befestigung des Hochspannungskabels an der Hochspannungsvorrichtung umfassen.

Bevorzugt ist an einer Innenfläche der Ausnehmung eine elektrisch isolierende Dichtschicht angebracht. Die Dichtschicht sorgt für eine Abdichtung des Steckkontaktstückes innerhalb der Ausnehmung, so dass ein Eindringen von Feuchtigkeit und Schmutz in den Bereich der elektrischen Kontaktierung zwischen dem Innenleiter und dem Leiterabschnitt des Hochspannungskabels. Die elektrische Verbindung zwischen dem Innenleiter und der zweiten Steuereinlage ist in diesem Fall besonders vorteilhaft, weil die Übergangsstelle an der Dichtschicht ebenfalls abgeschirmt werden kann, womit eine relativ gleichmäßige Feldverteilung an dieser Übergangsstelle erreicht ist. Die Dichtschicht kann beispielsweise Silikon umfassen. Silikon kann eine besonders vorteilhafte Dichtwirkung bereitstellen.

Als besonders vorteilhaft wird in diesem Zusammenhang angesehen, wenn die zweite Steuereinlage sich axial in einen die Dichtschicht umgebenden Teil des Isolierkörpers hinein erstreckt. Damit umgibt die zweite Steuereinlage zumindest teilweise auch die Dichtschicht. Die Abschirmwirkung der zweiten Steuereinlage kann damit besonders wirksam realisiert werden.

Gemäß einer weiteren Ausführungsform der Erfindung umfasst der Isolierkörper harzimprägniertes Papier. Somit sind die einzelnen Steuereinlagen durch Isolierschichten voneinander getrennt, wobei die Isolierschichten harzimprägniertes Papier aufweisen. Ein solcher Isolierkörper bildet einen kompakten Block, so dass insbesondere auch die erste und die zweite Steuereinlage besonders gleichmäßig ausgebildet sind. Auf diese Weise wird ein relativ gleichmäßiger Verlauf des elektrischen Feldes erreicht.

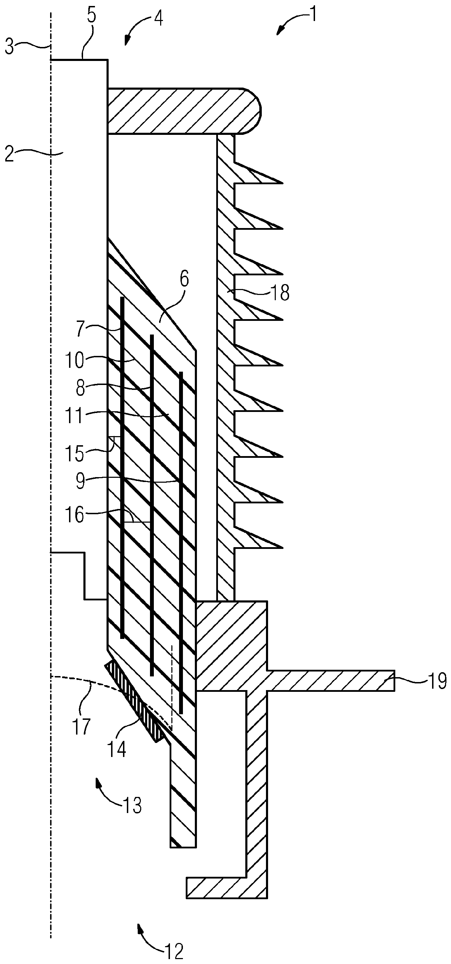

Die Erfindung wird im Folgenden anhand eines in der Figur dargestellten Ausführungsbeispiels näher erläutert.

Die Figur zeigt eine erfindungsgemäße Hochspannungsvorrichtung in schematischer Querschnittsdarstellung.

Im Einzelnen ist in der Figur eine erfindungsgemäße Hochspannungsvorrichtung 1 in Form eines Kabelendverschlusses gezeigt. Die Hochspannungsvorrichtung 1 ist im Wesentlichen zylindersymmetrisch um eine Längsrichtung 3 aufgebaut, die die Symmetrieachse bildet. Die Hochspannungsvorrichtung 1 umfasst einen zylindrischen, hohlen Innenleiter 2. Der Innenleiter 2 erstreckt sich entlang einer Längsrichtung der Hochspannungsvorrichtung 1, die durch eine Längsachse 3 grafisch gekennzeichnet ist.

Die Hochspannungsvorrichtung 1 weist ein Kopfende 4 mit einer Kopfarmatur 5 zur Befestigung eines elektrischen Leiters einer in der Figur grafisch nicht dargestellten Freiluftleitung auf.

Ferner umfasst die Hochspannungsvorrichtung 1 einen Isolierkörper 6, der den Innenleiter 2 entlang dessen Längsrichtung umgibt. Es ist erkennbar, dass der Isolierkörper 6 den Innenleiter 2 nicht entlang dessen gesamter Länge umgibt. Dies ist in der Tat weder in dem in der Figur dargestellten noch in allen übrigen Ausführungsbeispielen der Erfindung erforderlich. Der Isolierkörper 6 umfasst konzentrisch um den Innenleiter 2 angeordnete Steuereinlagen 7, 8, 9. Die Steuereinlagen 7-9 sind voneinander durch Isolierlagen 10, 11 voneinander getrennt. Die Isolierlagen 10, 11 umfassen Papier, das, wie der gesamte Isolierkörper 6, mit einem Harz imprägniert ist. Der Isolierkörper 2 ist von einem äußeren Gehäuse 18 der Hochspannungsvorrichtung 1 umgeben.

Aus Gründen der Übersichtlichkeit sind in der Figur lediglich drei Steuereinlagen 7 - 9 grafisch dargestellt. Die Anzahl der Steuereinlagen kann jedoch im Allgemeinen höher und an die jeweilige Anwendung angepasst sein. Der radiale Abstand zwischen den einzelnen Steuereinlagen beträgt üblicherweise wenige Millimeter.

Die Hochspannungsvorrichtung 1 weist ferner ein Fußende 12 auf, das dem Kopfende 4 gegenüberliegend angeordnet ist. Am Fußende 12 ist eine Fußarmatur zur Befestigung eines in der Figur bildlich nicht dargestellten Hochspannungskabels angeordnet. Aus Gründen der Übersichtlichkeit ist die Fußarmatur in der Figur grafisch nicht näher dargestellt.

Der Isolierkörper 6 weist eine Ausnehmung 13 auf. Die Ausnehmung 13 hat die Form eines Kegelstumpfes, der mit der sich öffnenden Seite zum Fußende 12 hin weist. Ein Teil einer Innenseite der Ausnehmung 13 ist von einer Dichtschicht 14 aus Silikon bedeckt. Die Dichtschicht 14 dichtet eine Kontaktstelle zwischen der Hochspannungsvorrichtung 1 und dem in die Ausnehmung 13 eingeführten Leiterabschnitt des Hochspannungskabels ab.

Der Innenleiter 2 ist mittels eines ersten Metallbandes 15 elektrisch mit einer ersten Steuereinlage 7 verbunden. Die erste Steuereinlage 7 ist am nächsten zum Innenleiter 2 angeordnet. Das erste Metallband 15 erstreckt sich innerhalb des Isolierkörpers 6. Eine zweite Steuereinlage 8 erstreckt sich zum Fußende 12 hin weiter als die erste Steuereinlage 7. Die zweite Steuereinlage 8 erstreckt sich insbesondere in denjenigen Teil des Isolierkörpers 6, der die Ausnehmung 13 und die Dichtschicht 14 umgibt.

Zur Herstellung einer abschirmenden Wirkung gegenüber der Übergangsstelle zwischen dem (in der Figur nicht dargestellten) Steckkontaktstück bzw. auch der Dichtschicht 14 und dem Isolierkörper 6 ist die zweite Steuereinlage 8 mittels eines zweiten Metallbandes 16 mit der ersten Steuereinlage 7 elektrisch verbunden. Damit ist die zweite Steuereinlage 8 bei Betrieb der Hochspannungsvorrichtung 1 auf dem gleichen elektrischen Potenzial wie der Innenleiter 2. Aufgrund der Abschirmung nehmen die Feldlinien am Fußende 12 einen relativ gleichmäßigen Verlauf. Zur Veranschaulichung ist in der Figur ein Feldlinienabschnitt 17 grob schematisch mittels einer unterbrochenen Linie dargestellt.

Ein Gehäuse 18 verleiht der Hochspannungsvorrichtung 1 mechanische Stabilität. Ein Befestigungsflansch 19 dient zur Montage der Hochspannungsvorrichtung 1 an einem dazu vorgesehen Bauteil einer Hochspannungsanlage.

## Patentansprüche

1. Hochspannungsvorrichtung (1) mit
- einem Innenleiter (2),
- einem den Innenleiter (2) entlang dessen Längsrichtung (3) umgebenden Isolierkörper (6), der konzentrisch um den Innenleiter (2) angeordnete und durch Isolierlagen voneinander beabstandete, elektrisch leitende Steuereinlagen (7-9) zur Feldsteuerung umfasst, sowie
- einer elektrisch leitenden Verbindung (15) zwischen dem Innenleiter (2) und einer ersten, dem Innenleiter (2) nächstliegenden Steuereinlage (7),
**gekennzeichnet durch**
eine elektrisch leitende Verbindung (16) zwischen dem Innenleiter (2) und einer zweiten Steuereinlage (8), die sich axial zu einem Fußende (12) der Hochspannungsvorrichtung (1) über die erste Steuereinlage (7) hinaus erstreckt.

2. Hochspannungsvorrichtung (1) nach Anspruch 1,
wobei der Isolierkörper (6) eine sich zum Fußende (12) der Hochspannungsvorrichtung (1) öffnende, kegelstumpfförmige Ausnehmung (13) aufweist und die zweite Steuereinlage (8) sich axial in einen die Ausnehmung (13) umgebenden Teil des Isolierkörpers (6) hinein erstreckt.

3. Hochspannungsvorrichtung (1) nach einem der vorangehenden Ansprüche,
wobei die zweite Steuereinlage (8) zur ersten Steuereinlage (7) nächstliegend ist.

4. Hochspannungsvorrichtung (1) nach einem der vorangehenden Ansprüche,
wobei ein erstes Metallband (15) vorgesehen ist, das den Innenleiter (2) mit der ersten Steuereinlage (7) elektrisch verbindet.

5. Hochspannungsvorrichtung (1) nach Anspruch 4,
wobei ein zweites Metallband (16) vorgesehen ist, das die erste Steuereinlage (7) mit der zweiten Steuereinlage (8) elektrisch verbindet.

6. Hochspannungsvorrichtung (1) nach Anspruch 5,
wobei die elektrische Verbindung zwischen dem zweiten Metallband (16) und der zweiten Steuereinlage (8) lötfrei ist.

7. Hochspannungsvorrichtung (1) nach einem der vorangehenden Ansprüche,
wobei die kegelstumpfförmige Ausnehmung (13) zur Aufnahme eines Leiterabschnittes eines Hochspannungskabels eingerichtet ist und die Hochspannungsvorrichtung (1) einen Steckkontakt zur Verbindung des Leiterabschnittes mit dem Innenleiter (2) umfasst.

8. Hochspannungsvorrichtung (1) nach Anspruch 7,
wobei an einer Innenfläche der Ausnehmung eine elektrisch isolierende Dichtschicht (14) angebracht ist.

9. Hochspannungsvorrichtung (1) nach Anspruch 8,
wobei die zweite Steuereinlage (8) sich axial in einen die Dichtschicht (14) umgebenden Teil des Isolierkörpers (6) hinein erstreckt.

10. Hochspannungsvorrichtung (1) nach einem der vorangehenden Ansprüche,
wobei der Isolierkörper (6) harzimprägniertes Papier umfasst.

## Claims

1. High-voltage device (1) with
- an inner conductor (2),
- an insulating body (6) that surrounds the inner conductor (2) along its longitudinal direction, and which comprises electrically conductive control linings (7-9) for field control, which are arranged concentrically around the inner conductor (2) and are spaced apart from each other by insulating layers, and
- an electrically conductive connection (15) between the inner conductor (2) and a first control lining (7) closest to the inner conductor (7),
**characterized by**
an electrically conductive connection (16) between the inner conductor (2) and a second control lining (8) which extends axially to a foot end (12) of the high-voltage device (1) beyond the first control lining (7).

2. High-voltage device (1) according to Claim 1,
wherein the insulating body (6) comprises a recess (13) having the form of a truncated cone opening to the foot end (12) of the high-voltage device (1), and the second control lining (8) extends axially into a part of the insulating body (6) that surrounds the recess (13).

3. High-voltage device (1) according to one of the preceding claims,
wherein the second control lining (8) is closest to the first control lining (7).

4. High-voltage device (1) according to one of the preceding claims,
wherein a first metal strap (15) is provided which electrically connects the inner conductor (2) to the first control lining (7).

5. High-voltage device (1) according to Claim 4,
wherein a second metal strap (16) is provided which electrically connects the first control lining (7) to the second control lining (8).

6. High-voltage device (1) according to Claim 5,
wherein the electrical connection between the second metal strap (16) and the second control lining (8) is solderless.

7. High-voltage device (1) according to one of the preceding claims,
wherein the recess (13) having the form of a truncated cone is constructed to accept a conductor section of a high-voltage cable and the high-voltage device (1) comprises a plug-in contact for connecting the conductor section to the inner conductor (2).

8. High-voltage device (1) according to Claim 7,
wherein an electrically insulating sealing layer (14) is applied to an inner surface of the recess.

9. High-voltage device (1) according to Claim 8,
wherein the second control lining (8) extends axially into a part of the insulating body (6) that surrounds the sealing layer (14).

10. High-voltage device (1) according to one of the preceding claims,
wherein the insulating body (6) comprises resin-impregnated paper.

## Revendications

1. Dispositif (1) de haute tension, comprenant
- un conducteur (2) intérieur,
- un corps (6) isolant, qui entoure le conducteur (2) intérieur le long de sa direction (3) longitudinale et qui comprend, pour commander le champ, des inserts (7 à 9) de commande conducteurs de l'électricité disposés concentriquement autour du conducteur (2) intérieur et mis à distance les uns des autres par des couches isolantes, ainsi que
- une liaison (15) conductrice de l'électricité entre le conducteur (2) intérieur et un premier insert (7) se trouvant le plus près du conducteur (2) intérieur,
**caractérisé par**
une liaison (16) conductrice de l'électricité entre le conducteur (2) intérieur et un deuxième insert (6) de commande, qui s'étend axialement, par rapport à une extrémité (12) de pied du dispositif (1) de haute tension, au-delà du premier insert (7) de commande.

2. Dispositif (1) de haute tension suivant la revendication 1,
dans lequel le corps (6) isolant a un évidement (13) en forme de tronc de cône s'ouvrant vers l'extrémité (12) de pied du dispositif (1) de haute tension et le deuxième insert (8) de commande s'étend axialement dans une partie, entourant l'évidement (13), du corps (6) isolant.

3. Dispositif (1) de haute tension suivant l'une des revendications précédentes,
dans lequel le deuxième insert (8) de commande est le plus près du premier insert (7) de commande.

4. Dispositif (1) de haute tension suivant l'une des revendications précédentes,
dans lequel il est prévu une première bande (15) métallique, qui relie électriquement le conducteur (2) intérieur au premier insert (7) de commande.

5. Dispositif (1) de haute tension suivant la revendication 4,
dans lequel il est prévu une deuxième bande (16) métallique, qui relie électriquement le premier insert (7) de commande au deuxième insert (8) de commande.

6. Dispositif (1) de haute tension suivant la revendication 5, dans lequel la liaison électrique, entre la deuxième bande (16) métallique et le deuxième insert (8) de commande, est sans brasure.

7. Dispositif (1) de haute tension suivant l'une des revendications précédentes,
dans lequel l'évidement (13) en forme de tronc de cône est conçu pour recevoir un tronçon conducteur d'un câble de haute tension et le dispositif (1) de haute tension comprend un contact à enfichage de liaison du tronçon conducteur au conducteur (2) intérieur.

8. Dispositif (1) de haute tension suivant la revendication 7,
dans lequel une couche (14) d'étanchéité, isolante électriquement, est mise sur une surface intérieure de l'évidement.

9. Dispositif (1) de haute tension suivant la revendication 8,
dans lequel le deuxième insert (8) de commande s'étend axialement dans une partie, entourant la couche (14) d'étanchéité, du corps (6) isolant.

10. Dispositif (1) de haute tension suivant l'une des revendications précédentes,
dans lequel le corps (6) isolant comprend du papier imprégné de résine.
